# EUROPEAN PATENT APPLICATION

(11) **EP 1 801 542 A2**
(43) Date of publication of application: **27.06.2007**
(21) Application number: 07007488.5
(22) Date of filing: 22.08.2003
(51) Int. Cl.: G01C 22/00, G06F 1/16, G01C 21/20

(54) **Mobile terminal device**

(30) Priority: 27.08.2002 JP 2002246696
(62) Divisional of application: 03791254.0
(71) Applicant: Vitec Co., Ltd., 140-0002 Tokyo (JP)
(72) Inventor: Tamura, Yasuhiro, Yashio-shi, Saitama 340-0800 (JP); Ito, Masahito, Kawaguchi-shi, Saitama 333-0842 (JP)
(74) Representative: Cross, Rupert Edward Blount

(57) **Abstract**

A mobile terminal apparatus (1) comprises a magnetic sensor (22) detecting three- dimensional components of the earth's magnetic vector, a tilt angle sensor (24) detecting acceleration components in at least two dimensions, a processing unit (10) determining an orientation by subjecting the detected earth's magnetic vector components to coordinate transformation, based on a result of a detected tilt angle. A position registering unit (30) receives a user's input designating registration of a position, and the processing unit registers the position, based on the input designating registration of the position and presents information related to the registered position, based on the determined orientation.

## Description

### TECHNICAL FIELD

The present invention relates to a mobile terminal apparatus and, more particularly, to a mobile terminal apparatus provided with the function of determining an orientation.

### BACKGROUND TECHNOLOGY

Recently, efforts are being put into the development of a mobile terminal apparatus provided with the function of measuring the orientation. A magnetic sensor is used to measure the orientation. A mobile terminal apparatus of this type refers to position information from a global positioning system (GPS) so as to display a current position, etc. on an on-screen map in accordance with the measured orientation.

A magnetic sensor not only detects the natural magnetic field but also detects a dynamic magnetic field generated inside a mobile terminal apparatus or by surrounding electronic appliances. Therefore, in order to retrieve only those components of magnetic field derived from the natural magnetic field, it is necessary to remove the dynamic components of magnetic field from the detected components of magnetic field. When a two-dimensional magnetic sensor is used, it is difficult to remove the dynamic components of magnetic field since the two-dimensional magnetic sensor is not capable of detecting the strength of magnetic field.

Study has been made to introduce a three-dimensional magnetic sensor in order to detect the strength of magnetic field. Further, for accurate determination of the orientation, the earth's magnetic vector components detected by a three-dimensional magnetic sensor should be corrected in consideration of the tilt of mobile terminal apparatus. The tilt of mobile terminal apparatus is measured by a tilt angle sensor.

### DISCLOSURE OF THE INVENTION

In these circumstances, it is preferable that the mobile terminal apparatus provided with the function of measuring the orientation be provided with a tilt angle sensor. We have focused our attention to effective uses of a tilt angle sensor and have successfully developed a variety of applications thereof. Accordingly, an object of the present invention is to provide a possible use to which the mobile terminal apparatus provided with the function of measuring the orientation is put, and to deliver a highly useful mobile terminal apparatus.

The present invention provides a mobile terminal apparatus comprising: a magnetic sensor detecting three-dimensional components of the earth's magnetic vector; a tilt angle sensor detecting acceleration components in at least two dimensions; a processing unit determining the orientation by subjecting the earth's magnetic vector components detected by the magnetic sensor to coordinate transformation, based on a result of detection by the tilt angle sensor; and a position registering unit receiving a user's input designating registration of a position, wherein the processing unit registers the position, based on the input designating registration of the position and presents information related to the registered position, based on the determined orientation. The registered position may be a direction instead of a latitude or longitude. It is possible to deliver a mobile terminal apparatus capable of man navigation, etc.

Another arrangement which is not an example of the present invention provides a mobile terminal apparatus comprising: a magnetic sensor detecting three-dimensional components of the earth's magnetic vector; a tilt angle sensor detecting acceleration components in at least two dimensions; and a processing unit determining the orientation by subjecting the earth's magnetic vector components detected by the magnetic sensor to coordinate transformation based on a result of detection by the tilt angle sensor, wherein the processing unit counts the number of steps that a user takes, based on acceleration components, detected by the tilt angle sensor, of frequencies within a predetermined range. According to this arrangement, it is possible to deliver a high useful mobile terminal apparatus by providing the apparatus with the function of pedometer.

Another arrangement, which is not an example of the present invention, provides a mobile terminal apparatus comprising: a magnetic sensor detecting three-dimensional components of the earth's magnetic vector; a tilt angle sensor detecting acceleration components in at least two dimensions; and a processing unit determining the orientation by subjecting the earth's magnetic vector components detected by the magnetic sensor to coordinate transformation, based on a result of detection by the tilt angle sensor, wherein the processing unit performs a predetermined process when any of the acceleration components detected by the tilt angle sensor exceeds a predetermined threshold. The predetermined process may be the turning on or off of a power supply, selection or deselection of an selectable item, or execution of a command. According to this arrangement, it is possible to deliver a mobile terminal apparatus capable of turning on or off a power supply with a simple action of, for example, quickly shaking the mobile terminal apparatus.

Another arrangement, which is also not an example of the present invention, provides a mobile terminal apparatus comprising: a magnetic sensor detecting three-dimensional components of the earth's magnetic vector; a tilt angle sensor detecting acceleration components in at least two dimensions; and a processing unit determining the orientation by subjecting the earth's magnetic vector components detected by the magnetic sensor to coordinate transformation, based on a result of detection by the tilt angle sensor, wherein the processing unit determines a screen scroll speed in accordance with the tilt angle determined from a result of detection by the tilt angle sensor. According to this arrangement it is possible to deliver a mobile terminal apparatus capable of adjusting a screen scroll speed in accordance with a tilt.

Arbitrary combinations with the invention of the aforementioned arrangements and implementations of the invention in the form of methods, apparatus, recording mediums and computer programs may also be practiced.

### BRIEF DESCRIPTION OF THE DRAWINGS

The foregoing and other various objects, features and advantages of this invention will be apparent and fully understood from the following detailed description of the preferred embodiment when taken in connection with the accompanying drawings.

Fig. 1 illustrates the structure of a mobile terminal apparatus for use in an embodiment of the present invention; and

Fig. 2 illustrates a flow by which the orientation is determined based on results of detection by the magnetic sensor and the tilt angle sensor.

### BEST MODE OF CARRYING OUT THE INVENTION

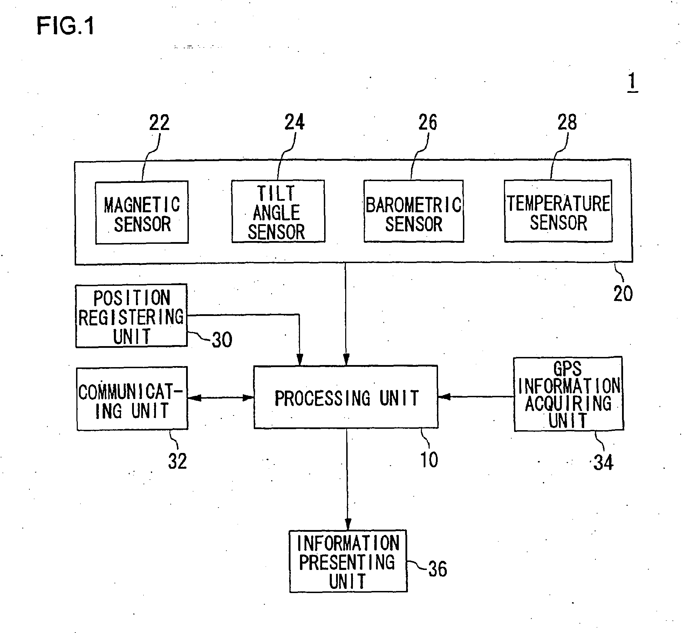

Fig. 1 illustrates the structure of a mobile terminal apparatus which may be used in an embodiment of the present invention. The mobile terminal apparatus 1 is a small-sized electronic appliance such as a mobile phone or a personal data assistant (PDA). Fig. 1 illustrates the structure for measurement of the orientation and for applications described later. It will be apparent to those skilled in the art, however, that the mobile terminal apparatus 1 may adopt any other structure suitable for its use.

The mobile terminal apparatus 1 is provided with a processing unit 10, a detecting unit 20, a position registering unit 30, a communicating unit 32, a GPS information acquiring unit 34 and an information presenting unit 36. The detecting unit 20 includes a magnetic sensor 22, a tilt angle sensor 24, a barometric sensor 26 and a temperature sensor 28, and is provided with the function of detecting the position, orientation and altitude. The position registering unit 30 receives a user's input designating registration of a position and records the input in a memory (not shown) in the processing unit 10. The communicating unit 32 is provided with the function of communicating with an external server using radio transmission. Communication may be done using cable transmission. The GPS information acquiring unit 34 receives position information from a GPS satellite. The processing unit 10 calculates a current position, i.e., a current latitude and longitude, based on the position information. By allowing the position information to be corrected by the orientation information from the magnetic sensor 22, the current position and orientation can be determined accurately. The processing unit 10 may use the position information and the orientation information so that they supplement each other. Instead of using the position information from the GPS satellite, the processing unit 10 may determine the current position and orientation, based only on the result of detection from the detecting unit 20. The information presenting unit 36 includes a display and outputs the information processed by the processing unit 10 in a format adapted for an application. The information presenting unit 36 may include a speaker and provide an audio output of the information to the user.

The magnetic sensor 22 detects three-dimensional components of the earth's magnetic vector. Any type of sensor, including a fluxgate sensor, a Hall device or magnetoresistance device, may be used. The tilt angle sensor 24 is an acceleration sensor for detecting acceleration components in at least two dimensions. Preferably, the tilt angle sensor 24 detects three-dimensional acceleration components. The barometric sensor 26 detects an atmospheric pressure, and the temperature sensor 28 detects a temperature. The detected temperature is used to correct drift in outputs from the magnetic sensor 22, the tilt angle sensor 24 and the barometric sensor 26 due to temperature drift.

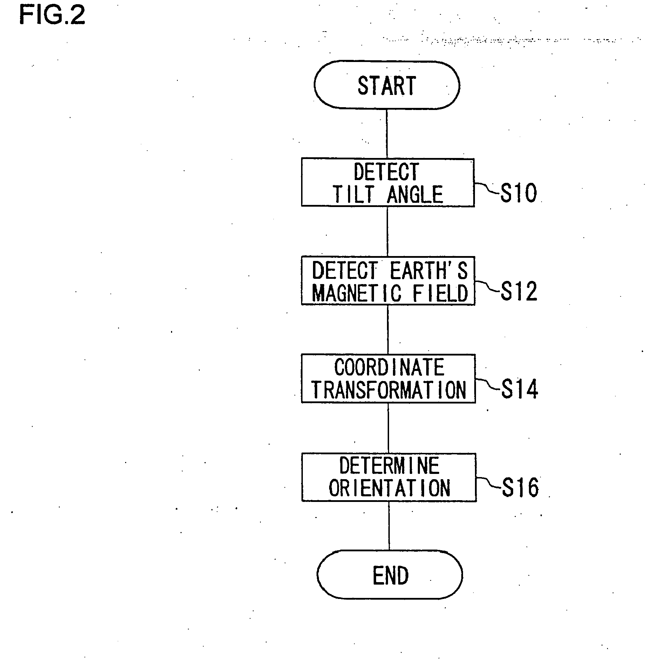

Fig. 2 illustrates a flow according to which the orientation is determined based on results of detection by the magnetic sensor 22 and the tilt angle sensor 24. The tilt angle of the magnetic sensor 22 is calculated based on the three-dimensional acceleration components detected by the tilt angle sensor 24 (S10). In this case, a pitch angle and a roll angle are calculated. The magnetic sensor 22 detects three-dimensional components of the earth's magnetic vector (S12). The processing unit subjects the components of the earth's magnetic vector to coordinate transformation using the pitch angle and the roll angle (S14), so as to determine the accurate orientation (S16). Correction for temperature may be carried out using the result of detection by the temperature sensor 28. Thus, the result of detection by the tilt angle sensor 24 in the mobile terminal apparatus 1 can be used to calculate the orientation. The present invention proceeds to take further advantage of the result of detection so as to deliver the following applications.

### <Application 1>

In Application 1 (which is not on its own an example of the claimed invention), the mobile terminal apparatus 1 is provided with the function of pedometer. The tilt angle sensor 24 detects the three-dimensional acceleration components in association with the movement of the mobile terminal apparatus 1. Therefore, while the user carrying the mobile terminal apparatus 1 is walking, the tilt angle sensor 24 not only detects the acceleration components corresponding to a tilt angle of the mobile terminal apparatus 1 but also detects low-frequency acceleration components corresponding to the user's movement.

The processing unit 10 subjects the result of detection by the tilt angle sensor 24 to frequency analysis so as to count the number of steps that the user takes, based on acceleration components of frequencies within a predetermined range. The predetermined range is configured to cover the user's walking speed. More specifically, it is configured to cover an oscillation frequency imparted by the action of walking to the mobile terminal apparatus 1. The term "walking" also applies to a case where the user runs at a full speed instead of slowly taking a walk. Oscillation caused by the action of walking in the mobile terminal apparatus 1 can be detected as frequency components within the predetermined range. As the mobile terminal apparatus 1 is intended to be carried by users as they walk, usability of the mobile terminal apparatus 1 is improved by allowing the mobile terminal apparatus 1 to have the function of counting the number of steps.

### <Application 2>

In Application 2, (which is not on its own an example of the present invention) the mobile terminal apparatus 1 is provided with the function of a easy-to-use power supply switch or the function of executing a command. For example, when the user carrying the mobile terminal apparatus 1 by had shakes it, the tilt angle sensor 24 detects relatively large acceleration components. The processing unit 10 determines that the mobile terminal apparatus 1 is shaken when any of the acceleration components detected by the tilt angle sensor 24 exceeds a predetermined threshold, and proceeds to perform a predetermined process. More specifically, the processing unit 10 turns on or off a power supply. According to the three-dimensional tilt angle sensor 24, it is possible to detect the direction (up, down, right or left) in which the mobile terminal apparatus 1 is shaken. Therefore, the processing unit 10 may turn the power supply on or off depending on the direction in which the apparatus is shaken. For example, the power supply may be configured to be turned on when the apparatus is shaken to the right and turned off when it is shaken to the left. The processing unit 10 may turn the power supply on or off in accordance with the number of times that the apparatus is shaken. For example, the processing unit 10 may turn on or off the power supply when the apparatus is shaken twice in a predetermined number of seconds. Alternatively, the processing unit 10 may turn on the power supply when the apparatus is shaken once in a predetermined number of seconds and turn off the power supply when the apparatus is shaken twice in a predetermined number of seconds. The turning on and off of the power supply is given as an example of the predetermined process. Alternatively, the predetermined process may be selection or deselection of a selectable item or execution of a command. By allowing the mobile terminal apparatus 1 to be provided with the function of a easy-to-use power supply switch or the function of executing a command, usability of the mobile terminal apparatus 1 is improved. The mobile terminal apparatus 1 may of course be provided with both the function of a power supply switch and the function of executing a command. When the mobile terminal apparatus 1 is also provided with the function of pedometer described in Application 1, the predetermined threshold that allows detection of shaking is preferably larger in level than the acceleration component detected during normal walking. With this, both the function of pedometer and the function of a power supply switch are usable.

### <Application 3>

In Application 3 (which is not on its own an example of the claimed invention), the mobile terminal apparatus 1 is provided with the easy-to-use function of adjusting screen scroll. The processing unit 10 uses the tilt angle, used to determine the orientation, in adjusting the screen scroll speed. More specifically, the processing unit 10 varies the screen scroll speed in accordance with the magnitude of tilt angle. Further, the direction of screen scroll may be determined in accordance with the direction of tilt. Preferably, the screen scroll can occur in any of desired directions including up, down, left and right. The user is capable of scrolling a screen only by tilting the mobile terminal apparatus 1. Usability of the mobile terminal apparatus 1 is improved accordingly. To activate the screen scroll adjusting function, the user may provide an instruction designating a scroll to the processing unit 10, by pressing a predetermined button, so that the processing unit 10 executes the function. The processing unit 10 adjusts the scroll speed with reference to the angle of tilt from a reference orientation of the mobile terminal apparatus 1 occurring at a point of time when the instruction for adjusting the scroll is given. For example, the scroll may occur in one direction. More specifically, the screen scroll is performed in accordance with the direction of tilt. When the scroll to a desired location is completed, the user returns the mobile terminal apparatus 1 to its original orientation. The scroll function may be turned off when returning the apparatus so that the screen remains non-scrolled and unchanged.

### <Application 4>

In Application 4 (which is an example of the present invention), the mobile terminal apparatus 1 is provided with the function of presenting position information based on the orientation. This function finds applications in a variety of situations. For example, one has to remember the position of a car parked in a parking lot at facilities such as an amusement park, a theme park and a mega shopping mall. However, human memory becomes obscure with time, making it difficult to identify the car.

To do away with the hassle, the user registers the position of a parked car in the mobile terminal apparatus 1. When the user presses a button for registration of the position, the position registering unit 30 receives the instruction for position registration. The processing unit 10 registers the current position based on the instruction for position registration. In this process, the processing unit 10 also registers an altitude based on a result of detection by the barometric sensor 26.

When the user returns toward the position of parking, the processing unit 10 provides information related to the registered position of parking to the information presenting unit 36, based on the current position, the orientation and the like. The processing unit 10 may read map information from an external server via the communicating unit 32 and display a map covering an area that includes the current position and the registered position, on a display of the information presenting unit 36, so as to navigate the user in a proper direction using an arrow. When reading three-dimensional map information, the processing unit 10 identifies the floor level in a multilevel self-parking garage, based on the registered altitude. With this, the mobile terminal apparatus 1 is capable of guiding the user to the position of parking.

The position registering unit 30 may receive an input of an instruction for registering a specific position. This may prove useful for Muslims who pray in the direction of Mecca at a specific time in a day. The processing unit 10 registers, in a memory, information on the position (latitude, longitude) of Mecca, based on the instruction for position registration, and indicates the direction of Mecca by an arrow, based on the position information and the orientation information. The position registering unit 30 may receive an input of an instruction designating a specific orientation. The processing unit 10 in this case may indicate on a screen the orientation of good and/or bad omens such as those defined in geomancy.

As described, the usability of the mobile terminal apparatus 1 is improved by presenting the information on the registered position, based on the registered position, the current position and the orientation.

The processing unit 10 may present a constellation in the sky on a screen, based on the position information and the orientation information. The processing unit 10 may switch between different formats of screen display, based on the result of detection by the tilt angle sensor 24. Normally, a display has a rectangular configuration. The user may want to display a constellation extending in a lateral direction instead of viewing it on a vertically elongated screen used in ordinary applications. The processing unit 10 may switch between a vertical display and a horizontal display of a constellation, responsive to the user's action of tilting the mobile terminal apparatus 1. For example, the processing unit 10 may switch the screen display when the mobile terminal apparatus 1 is tilted from a normal position at an angle equal to or larger than 45 degrees with respect to any of the X, Y and Z axes. With this, the user can easily select a desired format for display of information. The processing unit 10 may display the name of a constellation and the like on a screen by associating a star with a specific orientation or a specific angle from the horizon.

Each of the functions described above as four applications may be used alone or in combination. It is thus possible to expand the capabilities of the mobile terminal apparatus 1 by software processes without adding any new hardware structure to the mobile terminal apparatus 1.

### INDUSTRIAL USABILITY

As described above, the present invention is applicable to a mobile terminal apparatus provided with a tilt angle sensor.

## Claims

1. A mobile terminal apparatus comprising:
a magnetic sensor (22) detecting three-dimensional components of the earth's magnetic vector;
a tilt angle sensor (24) detecting acceleration components in at least two dimensions;
a processing unit (10) determining an orientation by subjecting the earth's magnetic vector components detected by the magnetic sensor to coordinate transformation, based on a result of detection by the tilt angle sensor;
a position registering unit (30) receiving a user's input designating registration of a position, wherein the processing unit is arranged to register the position, based on the input designating registration of the position and presents information related to the registered position, based on the determined orientation.
